# EUROPÄISCHE PATENTSCHRIFT

(11) **EP 0 616 885 B1**
(45) Veröffentlichungstag und Bekanntmachung des Hinweises auf die Patenterteilung: **03.01.2001**
(21) Anmeldenummer: 94103778.0
(22) Anmeldetag: 11.03.1994
(51) Int. Cl.: B32B 27/32, C08L 53/00

(54) **Matte, biaxial gereckte Polypropylenfolie Verfahren zu ihrer Herstellung**
Matt, biaxially stretched polypropylene film and process for its manufacture
Feuille en polypropylène étirée biaxialement et à surface mate, et son procédé de fabrication

(30) Priorität: 24.03.1993 DE 4309555
(43) Veröffentlichungstag der Anmeldung: 28.09.1994
(73) Patentinhaber: WOLFF WALSRODE AKTIENGESELLSCHAFT, D-29699 Walsrode (DE)
(72) Erfinder: Krallmann, Anton, Dipl.-Ing., D-29683 Fallingbostel (DE); Blum, Thomas, Dr., D-27283 Verden/Aller (DE); Schinkel, Ingo, Dipl.-Ing., D-29664 Walsrode (DE)
(74) Vertreter: Pettrich, Klaus-Günter, Dr.

(56) Entgegenhaltungen:
- EP-A- 0 365 463
- EP-A- 0 564 846
- DATABASE WPI Week 9141, Derwent Publications Ltd., London, GB; AN 91-298804 & JP-A-3 197 541 (IDEMITSU PETROCHEM. KK) 28. August 1991
- PATENT ABSTRACTS OF JAPAN vol. 016, no. 306 (M-1276)6. Juli 1992 & JP-A-04 086 260 (TOYO SEIKAN K) 18. März 1992

## Beschreibung

Die Erfindung betrifft matte, mehrschichtige Propylenfolien, die durch mindestens eine einseitige, coextrudierte Schicht aus einer Polymermischung ihr mattes Aussehen erhalten.

Es ist bereits eine Vielzahl von matten, biaxal gereckten Polypropylenfolien bekannt.

So wird in DE-A 3 231 013 speziell eine Polypropylenfolie mit einer rauhen Oberfläche beschrieben, die dadurch hergestellt wird, daß man die Folie vor dem Verstrecken einer Bestrahlung mit hochenergetischer Strahlung aussetzt.

In JP 9 148 661 wird ein Verfahren geschildert, wie man mit Sandstrahlen oder mit einem chemischen Ätzverfahren eine rauhe Oberfläche auf einer biaxial gereckten Polypropylenfolie erzeugt.

Eine zunehmende Semi-Opazität durch den Zusatz von organischen Peroxiden zu Propylen-Ethylen-Blockcopolymeren und zu Polyethylen basierenden Copolymeren wird in JP 2 103 214 beschrieben.

Dagegen begründen in DE-A 3 839 120 5 bis 10 % anorganische Füllstoffe, die über die ganze Dicke einer orientierten Polypropylenfolie eingesetzt werden, eine rauhe Oberfläche.

Eine einseitig matte Beschichtung aus anorganischem und/oder organischem Mattierungsmittel mit einem Esterharz, das aus organischen Lösungsmitteln aufgebracht wird, wird in EP-A 262 953 beschrieben.

Rauhe Oberflächen werden in JP 8 038 157 und JP 3 129 264 durch a- und β-Sphärolite des Polypropylens erzeugt.

In einer Reihe von Patenten werden matte Folien beschrieben, bei denen der Matteffekt durch Blockcopolymere des Propylens und des Ethylens oder durch Mischen von Polypropylenhomo- und/oder Copolymerisaten mit Polyethylen hervorgerufen wird.

So wird in JA 6 032 668 eine nicht glänzende, biaxiale Polypropylenfolie beschrieben, die über die ganze Foliendicke hin aus einem Blend aus Polypropylen mit 10 bis 65 % Polyethylen besteht.

Eine mehrschichtige Folie mit geringem Oberflächenglanz wird dadurch hergestellt, daß ein monoaxial verstreckter Polypropylenfilm mit einem Gemisch aus Propylen-Ethylen-Copolymer und High Density Polyethylen laminiert wird und das Laminat eine gemeinsame Querverstreckung erfährt (JP 8 001 525).

EP-A 122 495 beschreibt einen mindestens 2-schichtigen, biaxial gereckten Polypropylenfilm, bei dem mindestens eine Schicht aus einem Polyolefin mit einem Ethylenanteil von 10 bis 50 Gew.-% besteht. Als Beispiel wird ein Ethylenpropylenblockcopolymer mit 3 Schmelzbereichen zwischen 120 und 160°C beschrieben.

EP-A 44 544 beschreibt eine mehrschichtige, gereckte Polypropylenfolie mit einem zweischichtigen Polypropylenaufbau, auf den zusätzlich eine mono- oder biaxial verstreckte Propylen-Ethylen-Blockcopolymerschicht aufgebracht ist. Außerdem wird die Option einer zusätzlichen Klebeschicht offengehalten.

Einen nicht glänzenden, laminierten Film, der durch biaxiales Verstrecken von Polypropylen, das 10 bis 50 % Ethylen enthält, hergestellt wird, beschreibt JP 0 184 840.

Auch JP 0 054 783 beschreibt eine biaxial gereckte Folie, die eine rauhe Oberfläche durch ein Propylen-Ethylen-Blockcopolymer hat.

In DE-A-4 209 918 wird ein Folienaufbau beschrieben, bei dem die Mattschicht aus Propylen-Ethylen-Blockcopolymer, Propylen-Ethylen(Butylen), Randomco- oder (ter)polymer, einem auf Ethylen basierender Co- oder (Butylen)Terpolymer, der mit polaren Gruppen modifiziert wurde, und gegebenenfalls noch Polyamid enthält, beschrieben.

Matte Oberflächen können auch durch Laminieren von einseitig gerecktem Ethylen-Propylen-Copolymeren auf eine biaxial-gereckte Polypropylenfolie erhalten werden.

Die Verfahren zur Herstellung von biaxial gereckten Polypropylenfolien sind teilweise recht aufwendig oder mit hohen Investitionen verbunden (z.B. chem. Ätzverfahren, Sandstrahlen, Elektronenstrahlhärtung, Lackieren). Andere Folien erfüllen hinsichtlich der optischen Eigenschaften, Siegelfähigkeit oder Bedruckbarkeit der matten Schicht die Anforderungen des Marktes nicht. Deshalb war es Aufgabe der vorliegenden Erfindung zum einen, den Marktanforderungen gerecht zu werden und zum anderen, auf bestehenden Anlagen mit den vorhandenen Coextrusionseinrichtungen für biaxial gerecktes Polypropylen eine Mattfolie herzustellen.

Gegenstand der vorliegenden Erfindung sind matte, zwei- oder mehrschichtige, biaxial gereckte Polypropylenfolien aus einer außen liegenden Mattschicht M, einer Kernschicht K und wahlweise weiteren Schichten S, die sich auf der gegenüberliegenden Seite der Mattschicht an die Kernschicht anschließen, wobei die Mattschicht M eine Schichtdicke von 0,5 bis 5,0 µm hat und aus einer Polymermischung der Komponenten
- 25 - 75 %: eines oder mehreren Polypropylen-Polyethylen-Blockcopoly meren
- 5 - 15 %: eines auf Ethylen basierenden Co- oder Terpolymeren, modifiziert mit polaren Gruppen
- 15 - 40 %: eines aus Propylen/Ethylen/Butylen aufgebauten statistischen Co- und/oder Terpolymer mit Propylen als Hauptkomponente
- 5 - 20 %: eines Polyethylens mit hoher Dichte
- 0 - 5 %: einer natürlichen oder synthetischen Kieselsäure
aufgebaut ist, wobei die o.a. Komponenten im Anlieferungszustand und/oder in Form von Batchen aus diesem eingesetzt werden,
daß die Kernschicht K
aus einem thermoplastischen Polymer und/oder Copolymer des Propylens, das mit üblichen Slip-, Antistatik- und/oder Antiblockmitteln ausgerüstet sein kann,
daß die Schichten S,
die sich auf der gegenüberliegenden Seite der Mattschicht an die Kernschicht K anschließen,
entweder aus einem thermoplastischen Polypropylen,
das mit üblichen Slip-, Antistatik- und/oder Antiblockmitteln ausgerüstet sein kann,
und/oder aus einem thermoplastischen, statistischen Copolymeren
des Polypropylens mit einem oder mehreren α-Olefinen mit 2 bis 6 C-Atomen, das mit üblichen Slip-, Antistatik- und/oder Antiblockmitteln ausgerüstet sein kann,
oder aus einer heißkaschierbaren
Schicht aus Mischungen aus Ethylen basierenden Copolymeren,
oder aus einer Schichtenkombination der o.a. Schichten S bestehen.

Als Ausgangsmaterialien für die Mattschicht M dienen:
1. Polypropylen-Copolymerisate, die aus Propylen und α-Olefinen vorzugsweise Ethylen nach einem Verfahren der Blockpolymerisation oder heterophasische Copolymerisate des Ethylens und Propylens oder kautschuk-modifiziertes Polypropylen oder PP-Blockcopolymere und Reaktorblends, vorzugsweise ein Copolymer gemäß Anspruch 3.
2. Lineare Copolymere des Ethylens niedriger Dichte, die modifiziert sind und/oder Polyethylene niedriger Dichte, die kautschuk-modifiziert sind und eine Anhydridfunktionalität aufweisen und/oder Terpolymere des Ethylens mit Acrylsäureestern und Maleinsäureanhydrid; vorzugsweise ein Co-(Ter)Polymer gemäß Anspruch 6.
3. Statistische Propylen/Ethylen Copolymere mit 2 bis 6 Gew.-% Ethylen oder statistische Terpolymere aus Propylen, Ethylen und Butylen mit einem Comonomergehalt von < 15 Gew.-% und mit einem Butylengehalt von < 7 Gew.-%; vorzugsweise ein Co-(Ter)Polymer gemäß Anspruch 4.
4. Polyethylen mit hoher Dichte in einem Bereich von 0,94 bis 0,965 und einer Schmelzindex von 0,3 bis 5 g/10 min bei 190°C und 50 N Belastung; vorzugsweise ein HDPE gemäß Anspruch 5.
5. Synthetische und/oder natürliche Kieselsäure/SiO₂-Teilchen mit einer Teilchengröße < 10 µm.

Als Ausgangsmaterialien für die Kernschicht K dienen:
ein isotaktisches Polypropylen mit einem n-heptanlöslichen Anteil von 6 Gew.-% oder weniger, mit einer Dichte von 0,90 bis 0,91 g/cm³ und einem Schmelzflußindex von 0,5 g/10 min bis 8 g/10 min bei 230°C und 21,2 N Belastung (bestimmt nach DIN 53735) besonders bevorzugt wird ein Polypropylen mit einem Schmelzflußindex von 1 bis 4 g/10 min und/oder
ein statistisches Propylen/Ethylen Copolymeres mit 2 bis 6 Gew.-% Ethylen, mit einer Dichte von vorzugsweise 0,895 bis 0,960 g/cm³, einem Schmelzindex von 1 bis 7 g/10 min bei 230°C und 21,2 N Belastung und einem Kristallitschmelzpunkt je nach Typ im Bereich von 125 bis 148°C (unter dem Polarisationsmikroskop)
   und/oder
ein Propylen/Butylen/Ethylencopolymer mit einem Comonomergehalt von vorzugsweise < 15 Gew.-% und einem Butylengehalt von vorzugsweise < 7 Gew.-% mit einem vorzugsweisen Schmelzflußindes von 0,1 bis 16 g/10 min bei 230°C und 21,2 N Belastung, besonders bevorzugt von 4 bis 10 g/10 min bei 230°C und 21,2 N.

Als Ausgangsmaterialien für die Schichten S dienen:
isotaktisches Polypropylen und/oder statistische Co- und/oder Terpolymere, die auch als Ausgangsmaterialien für die Kernschicht dienen
   und/oder
ein Gemisch für eine Heißkaschieranwendung, daß in der bevorzugten Ausführungsform aus Ethylenvinylacetat-Copolymeren A und mindestens einem weiteren Copolymeren aus der Gruppe der Ethylen-Ethylacrylat-Copolymeren B1 oder der Gruppe der Ethylen-Acrylsäure-Copolymeren B2 besteht.
   Das Ethylenvinylacetat-Copolymer A) enthält in einer bevorzugten Ausführungsform 70 bis 95, insbesondere 75 bis 95 Gew.-% polymerisierte Ethyleneinheiten, wobei in einer besonders bevorzugten Ausführungsform der restliche Anteil im wesentlichen oder vollständig aus polymerisiertem Vinylacetat besteht.
   Das Ethylen-Ethylacrylat-Copolymer B1) enthält in einer bevorzugten Ausführungsform im wesentlichen polymerisierte Ethyleneinheiten, insbesondere wenigstens 88 Gew.-% polymerisierte Ethyleneinheiten, insbesondere 88 bis 92 Gew.-% polymerisierte Polyethyleneinheiten, wobei die restlichen Anteile im wesentlichen oder vollständig aus polymerisiertem Ethylacrylat bestehen.
   Das Ethylen-Acrylsäure-Copolymer B2) besteht in einer bevorzugten Ausführungsform im wesentlichen aus polymerisierten Ethyleneinheiten, insbesondere wenigstens 85 Gew.-% polymerisierten Ethyleneinheiten, besonders bevorzugt zu 85 bis 95 Gew.-% aus polymerisierten Ethyleneinheiten, wobei die restlichen Anteile im wesentlichen oder vollständig aus Polymerisierter Acrylsäure bestehen.
   Das Ethylenvinylacetat-Copolymer A hat vorzugsweise einen Schmelzflußindes von 0,1 bis 15 g/10 min bei 230°C und 21,2 N, besonders bevorzugt von 0,3 bis 8 g/10 min bei 230°C und 21,2 N.

Folien der genannten Art werden dadurch hergestellt, daß zunächst ein 3-schichtiger Film coextrudiert wird.

Dieser coextrudierte Film wird nach dem Verlassen der Breitschlitzdüse derart abgekühlt, daß die Mattschicht eine möglichst langsame Abkühlung erfährt. Anschließend wird der Film erneut auf ca. 100 bis 130°C aufgeheizt und erfährt eine Längsreckung im Verhältnis von 3 bis 7 - vorzugsweise von 4 bis 5. Nach der Längsreckung erfolgt bei Temperaturen zwischen 150 und 170°C eine Querreckung im Verhältnis 7 bis 12 - vorzugsweise 8 bis 9. Vor dem Auslauf aus dem Recktunnel wird der Film thermofixiert. Er wird vor dem Aufwickeln mindestens auf einer Seite mit einer Coronaentladung oder mit einer Flammvorbehandlung behandelt.

Eine Alternative zu dem oben geschilderten Verfahren zur Herstellung einer 4-schichtigen Folie ist eine 3-Schicht-Coextrusion der Mattschicht M, der Kernschicht K und bei Bedarf einer Schicht S, die zuerst, wie oben geschildert, gemeinsam längsverstreckt werden. Zwischen dem Auslauf des Längsstreckenteiles und dem Einlauf in den Querreckteil erfolgt nun, wie in EP 0 424 761 A2 geschildert, eine Schmelzbeschichtung oder Filmlminierung mit einer weiteren Schicht S. Nach dem Aufbringen dieser Schicht erfolgt eine gemeinsame Querverstreckung des Folienverbundes im Verhältnis 1:7 bis 1:12 -vorzugsweise im Verhältnis von 1:8,5 bis 1:9,5 der wie üblich eine Thermofixierung und Coronabehandlung beziehungsweise Flammvorbehandlung folgt.

Für den Fachmann war es überraschend, daß durch Zugabe eines Polyethylens mit hoher Dichte, in den angegebenen Konzentrationsbereichen zu Gemischen aus PP-PE Blockcopolymeren und Randomcopolymeren und zum modifizierten Ethylen der Matteffekt von coextrudierten, biaxialen Polypropylenfolien nachhaltig gesteigert werden kann.

Die verwendeten, auf Ethylen basierenden Co- oder Terpolymere, die polare Gruppen tragen und elastomermodifiziert sind, werden normalerweise als Haftvermittler in einer Zwischenschicht in Verbundfolien benutzt, um zwei nicht zueinanderhaftende Polymerschichten zu verbinden. In einem solchen Verbund bewirkt die Haftvermittlerschicht keine Beeinträchtigung der optischen Eigenschaften. Die Werte für Trübung und Klarheit der Folie werden nicht verändert.

Als eine Komponente in einer an der Folienoberfläche liegenden Mattschicht reduzieren sie den Glanz, der u.a. für ein mattes Erscheinen der biaxial gereckten Folien verantwortlich ist.

Die angegebenen Rezepturen, die Gegenstand des Patentes sind, führen bei einer biaxialen Verstreckung zu einem mattem Erscheinungsbild.

Außerdem kann in biaxial orientierter Polypropylenfolie, die mit einer Mattschicht nach angegebener Rezeptur hergestellt wird, die Schichtdicke der Mattschicht in weiten Bereichen variiert werden, ohne daß sich eine Veränderung der optischen Eigenschaften ergibt. Selbst mit Schichtdicken < 2 µm erhält man matte Folien.

Die erfindungsgemäße Folie hat vorzugsweise eine Gesamtdicke von 10 bis 40 µm.

Die Mattschicht M ist dadurch gekennzeichnet, daß sie vorzugsweise eine Dicke von 1 bis 4 µm hat und aus
- 25 - 75 %: einem oder mehreren Polypropylene-Polyethylen-Blockcopolymeren,
- 5 - 15 %: eines auf Ethylen basierenden Co- oder Terpolymeren, modifiziert mit polaren Gruppen,
- 15 - 40 %: eines Randomcopolymerisates aus Propylen und Ethylen mit einem Ethylengehalt von 2 bis 6 Gew.-%,
- 5 - 20 %: eines Polyethylens mit hoher Dichte
- 0 - 2 %: einer natürlichen Kieselsäure
besteht.

Die Kernschicht weist vorzugsweise eine Dicke von
- 9 - 39 µm: auf und besteht aus
- 97 - 100 %: eines isotaktischen Polypropylens, das einen Schmelzindex von 0,5 bis 6 g/10 min (230°C/21,2N),
- 3 - 0 %: Slip-, Antistatik und/oder Antiblockmittel.

Die Schichten S haben entweder eine vorzugsweise Dicke von 0,5 bis 1,5 µm und bestehen aus
- 97 - 100 %: eines isotaktischen Polypropylens mit einem Schmelzindex von 0,5 bis 6 g/10 min (230°C/21,2N)
oder
eines statistischen Propylen/Ethylen Copolymeren mit 3 bis 5 % Ethylen und einem Schmelzindex von 3 bis 16 g/10 min (230°C/21,2N)
oder
eines statischen Propylen/Ethylen Butylen Terpolymeren mit einem Comonomergehalt von < 12 % und einem Schmelzindex von 3 bis 16 g/10 min (230°C/21,2N) und
- 3 - 0 %: Slip-, Antistatik und/oder Antiblockmittel
oder haben eine vorzugsweise Dicke von 3 bis 15 µm und bestehen aus
- 65 - 95 %: Ethylenvinylacetat-Copolymeren
- 10 - 35 %: Ethylen-Ethylacrylat-Copolymeren
- 8 - 30 %: Ethylen-Acrylsäure-Copolymeren.

Anwendung findet eine erfindungsgemäße Folie als Klebstoff- oder Thermokaschierfolie für die graphische Industrie oder als heißsiegelbare Folie für eine Beutelfertigung oder Verbundfolienfertigung.

In den nachfolgenden Beispielen werden folgende Prüfmethoden und Verfahren zur Bestimmung der Werte und Eigenschaften verwendet:

Der Glanz wird nach ASTM D 2457 bestimmt. Er ist hier der unter einem Winkel von 45° reflektierte Lichtanteil in Glanzeinheiten GE, bezogen auf einem Schwarzglasspiegel, als 100 GE Standard.

Die Trübung wird nach ASTM D 1003 bestimmt. Sie wird in % angegeben und ist das Verhältnis von difuser Lichttransmission zu totaler Lichttransmission multipliziert mit 100.

### Beispiele

Verwendete Substanzen für die Mattschichten

### Polymer 1

Blockcopolymer PP/PE
Schmelzflußindex (230°C/21,2 N) 3 g/10 min.
Schmelzpunkt (DSC)∗ 162°C
Elastizitätsmodul (DIN 53457) 1300 N/mm²

### Polymer 2

LDPE Elastomer- und Säureanhydrid-modifiziert
Schmelzflußindex (230°C/21,2 N) 4,3 g/10 min.
Schmelzpunkt (DSC)∗ 104°C

### Polymer 3

LLDPE Elastomer- und Säureanhydrid-modifiziert
Schmelzflußindex (230°C/21,2 N) 6,2 g/10 min.
Schmelzpunkt (DSC)∗ 125°C

### Polymer 4

P/E Randomcopolymer mit 1000 ppm SiO₂
Schmelzflußindex (230°C/21,2 N) 4,7 g/10 min.
Schmelzpunkt (DSC)∗ 140°C

### Polymer 5

Polyethylen mit hoher Dichte mit einer einer Dichte 0,956 g/cm³
Schmelzflußindex (190°C/50N) 1,6 g/10 min
Schmelzpunkt (DSC) 130°C

### Polymer 6

Isotaktisches Polypropylen mit n-Heptan löslichem Anteil von ≤ 6 %
Schmelzflußindex (230°C/21,2 N) 3,3 g/10 min

### Polymer 7

Mischung aus 65 - 95 % Ethylenvinylacetat-Copolymeren
10 - 35 % Ethylen-Ethylacrylat-Copolymeren
8 - 30 % Ethylen-Acrylsäure-Copolymeren

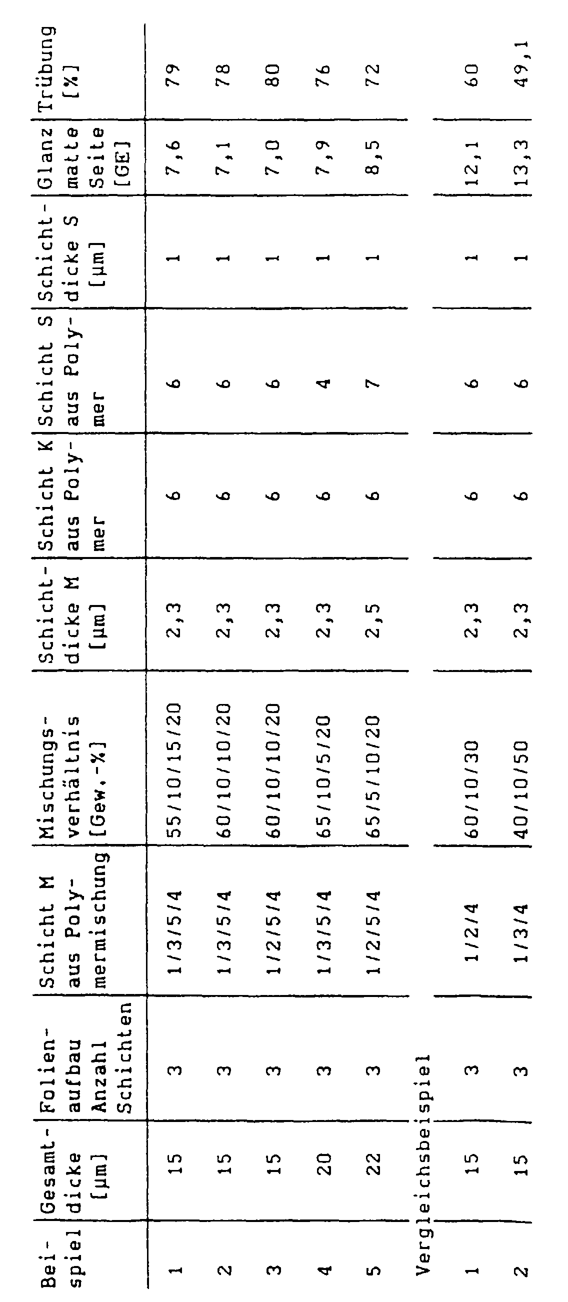

### Beispiel 1

Eine Mischung der Polymere 1/3/5/4 im Verhältnis 55/10/15/20 wird zu einem Batch verarbeitet. Dieses Batch bildet die Mattschicht und wird mit einer Polypropylenschicht, die im wesentlichen frei von Antiblockmitteln ist, aber Slip- und Antistatikadditive enthält und mit einer zweiten, mit Antiblockmitteln ausgerüsteten Polypropylenschicht coextrudiert. Danach erfolgt eine Längsverstrekkung im Verhältnis 1:4,5 und anschließend eine Querverstreckung im Verhältnis 1:9. Auf der nicht matten Seite erhält die Folie vor dem Aufwickeln eine Coronavorbehandlung. Die Folie ist 15 µm dick. Dabei entfallen auf die Mattschicht 2,3 µm +-0,1µm, auf die Kernschicht 11,7 µm und die Schicht S = 1,0 µm. Die Folie wird für eine Klebstoffkaschierung von Druckerzeugnissen verwendet.

### Beispiel 2

Aufbau und Verfahrensbedingungen wie im Beispiel 1. Für die Mattschicht M wird eine Mischung der Polymere 1/3/5/4 im Verhältnis 60/10/10/20 gewählt.

### Beispiel 3

- wie Beispiel 1 -: jedoch mit Polymermischung 1/2/5/4 im Verhältnis 60/10/10/20 für die Mattschicht.

### Beispiel 4

Eine Mattschicht aus einer Mischung der Polymere 1/3/5/4 im Verhältnis 65/10/5/20 wird mit einer Polypropylenschicht, die im wesentlichen frei von Additiven ist und einer Siegelschicht aus Polymer 4 mit üblichen Additiven wie Antiblock-, Antistatik- und Slipmitteln coextrudiert. Danach erfolgt eine Längsverstreckung im Verhältnis 1:5 und anschließend eine Querverstreckung im Verhältnis 1:9. Vor dem Aufwickeln erfolgt eine mindestens einseitige Coronavorbehandlung. Die Folie hat eine Gesamtdicke von 20 µm, wobei auf die Mattschicht 2,3 µm, die Polypropylenschicht 16,7 µm und die Siegelschicht 1 µm entfallen. Diese Folie eignet sich u.a. für das Bedrucken, Beutelfertigung auf horizontalen und vertikalen Schlauchbeutelmaschinen und in bedruckter und unbedruckter Form als Ausgangsfolie für diverse Verbundfolien.

### Beispiel 5

Eine Mattschicht aus einer Mischung der Polymere 1/2/5/4 im Verhältnis 65/5/10/20 wird mit einer Polypropylenschicht, die im wesentlichen frei von Antiblockmitteln ist, aber Slip- und Antistatikadditive enthält, coextrudiert und im Verhältnis 1:5 längsverstreckt. Danach erfolgt, wie in EP 0 424 761 A2 beschrieben, eine Laminierung oder Extrusion der heißkaschierten Schicht mit der Mischung 7.

Nach dem Aufbringen der heißkaschierbaren Schicht erfolgt ein Querverstrecken der Folie im Verhältnis von 1:9.

Die so hergestellte heißkaschierbare Folie hat eine Gesamtdicke von 22 µm, wobei auf die Mattschicht 2,5 µm, die Polypropylenschicht 12,5 um und auf die Heißkaschierschicht 7 µm entfallen. Eine solche Folie wird für die Veredelung von Druckerzeugnissen für die graphische Industrie eingesetzt.

### Vergleichsbeispiel 1

- wie Beispiel 1 -: jedoch mit Polymermischung 1/2/4 im Verhältnis 60/10/30 für die Mattschicht.

### Vergleichsbeispiel 2

- wie Beispiel 1 -: jedoch mit Polymermischung 1/3/4 im Verhältnis 40/10/50 für die Mattschicht.

## Patentansprüche

1. Matte, zwei- oder mehrschichtige, biaxial gereckte Polypropylenfolien aus einer außen liegenden Mattschicht M, einer Kernschicht K und wahlweise weiteren Schichten S, die sich auf der gegenüberliegenden Seite der Mattschicht an die Kernschicht anschließen, wobei die Mattschicht M eine Schichtdicke von 0,5 bis 5,0 µm hat und aus einer Polymermischung der Komponenten
25 - 75 % eines oder mehreren Polypropylen-Polyethylen-Blockcopoly meren
5 - 15 % eines auf Ethylen basierenden Co- oder Terpolymeren, modifiziert mit polaren Gruppen
15 - 40 % eines aus Propylen/Ethylen/Butylen aufgebauten statistischen Co- und/oder Terpolymer mit Propylen als Hauptkomponente
5 - 20 % eines Polyethylens mit hoher Dichte
0 - 5 % einer natürlichen oder synthetischen Kieselsäure
aufgebaut ist, wobei die o.a. Komponenten im Anlieferungszustand und/oder in Form von Batchen aus diesem eingesetzt werden,
die Kernschicht K
aus einem thermoplastischen Polymer und/oder Copolymer des Propylens, das mit üblichen Slip-, Antistatik- und/oder Antiblockmitteln ausgerüstet sein kann,
die Schichten S,
die sich auf der gegenüberliegenden Seite der Mattschicht an die Kernschicht K anschließen,
entweder aus einem thermoplastischen Polypropylen,
das mit üblichen Slip-, Antistatik- und/oder Antiblockmitteln ausgerüstet sein kann,
und/oder aus einem thermoplastischen, statistischen Copolymeren
des Polypropylens mit einem oder mehreren α-Olefinen mit 2 bis 6 C-Atomen, das mit üblichen Slip-, Antistatik- und/oder Antiblockmitteln ausgerüstet sein kann,
oder aus einer heißkaschierbaren
Schicht aus Mischungen aus Ethylen basierenden Copolymeren,
oder aus einer Schichtenkombination der o.a. Schichten S bestehen.

2. Folie nach Anspruch 1, dadurch gekennzeichnet, daß das Polypropylen der Kernschicht aus einem isotaktischen Polypropylen mit einem n-heptanlöslichen Anteil von 6 Gw.-% und weniger besteht.

3. Folie nach Ansprüchen 1 - 2, dadurch gekennzeichnet, daß das in der Mattschicht enthaltende Polypropylen-Polyethylen-Blockcopolymer einen Ethylenanteil von 6-8 Gew.-% und einen Schmelzindex von 3-6 g/10 min (DIN 53735) besitzt.

4. Folie nach Ansprüchen 1 - 3, dadurch gekennzeichnet, daß das in der Mattschicht enthaltende Co- bzw. (Ter)polymer aus Propylen/Ethylen/(Butylen) besteht und einen Propylenanteil von größer 80 % und einen Schmelzflußindex von 3-6 g/10 min (DIN 53735) aufweist.

5. Folie nach Ansprüchen 1 - 4, dadurch gekennzeichnet, daß das in der Mattschicht enthaltende High Density Polyethylen (HDPE) einen Schmelzflußindex von 1-2 g/10 min (DIN 53735) besitzt.

6. Folie nach Ansprüchen 1 - 5, dadurch gekennzeichnet, daß das in der Mattschicht enthaltende mit polaren Gruppen modifizierte Co- oder Terpolymer auf Ethylenbasis einen Schmelzflußindex von 3-8 g/10 min (DIN 53735 bei 190°C) besitzt.

7. Verfahren zur Herstellung der Folien gemäß den Ansprüchen 1 - 6, dadurch gekennzeichnet, daß die den einzelnen Schichten der Folie entsprechenden Schmelzen durch eine Flachdüse coextrudiert werden, die coextrudierte Folie auf entsprechenden Walzen zur Verfestigung eine Abkühlung erfährt, die Folie in Längsrichtung bei einer Temperatur von 100-130°C mit dem Faktor 4 - 5 und in Querrichtung bei einer Temperatur von 150 - 170°C mit dem Faktor 8 - 9 verstreckt, die biaxial gestreckte Folie thermofixiert, coronavorbehandelt und anschließend aufgewickelt wird.

8. Verfahren nach Anspruch 7, dadurch gekennzeichnet, daß bei dem zwischen Längsreckschritt und Querreckschritt durch Schmelzbeschichtung oder Filmlaminierung eine zusätzliche Schicht aufgebracht werden kann.

9. Verwendung der Folie gemäß einem der Ansprüche 1 - 6 als Verpackungsfolie.

10. Verwendung der Folie gemäß einem der Ansprüche 1 - 6 zur Veredelung von graphischen Druckerzeugnissen, wobei die Mattseite nicht zum Druckerzeugnis zeigt.

11. Folie gemäß Anspruch 1, dadurch gekennzeichnet, daß auf der Mattseite ein UV-härtender Klarlack aufgetragen wird.

## Claims

1. Matt, double- or multi-layer, biaxially stretched polypropylene films comprising an outer matt layer M, a core layer K and optionally additional layers S which are adjacent to the core layer on the side opposite to the matt layer, wherein the matt layer M has a layer thickness of from 0.5 to 5.0 µm and is composed of a polymer mixture of components comprising
25 - 75% of one or more polypropylene-polyethylene block copolymers,
5 - 15 % of an ethylene-based co- or terpolymer modified with polar groups,
15 - 40 % of a random co- and/or terpolymer produced from propylene/ethylene/butylene with propylene as the main component,
5 - 20 % of a high density polyethylene and
0 - 5% of a natural or synthetic hydrated silica,
wherein the aforementioned components are used in their state as delivered and/or in the form of batches therefrom,
the core layer K
comprises a thermoplastic polymer and/or copolymer of propylene which may be provided with conventional slip agents, antistatic agents and/or anti-seizing agents,
layers S,
which are adjacent to the core layer on the side opposite the matt layer,
comprise either a thermoplastic polypropylene,
which may be provided with conventional slip agents, antistatic agents and/or anti-seizing agents,
and/or a thermoplastic random copolymer
of polypropylene with one or more α-olefines containing 2 to 6 carbon atoms, which may be provided with conventional slip agents, antistatic agents and/or anti-seizing agents,
or a layer which can be heat laminated,
composed of mixtures of ethylene-based copolymers,
or a layer combination of the above-mentioned layers S.

2. A film according to claim 1, characterised in that the polypropylene of the core layer consists of an isotactic polypropylene with a fraction which is soluble in n-heptane of 6 % by weight or less.

3. A film according to claims 1 - 2, characterised in that the polypropylene-polyethylene block copolymer contained in the matt layer has an ethylene content of 6-8 % by weight and a melt flow index of 3-6 g/10 min (DIN 53735).

4. A film according to claims 1 - 3, characterised in that the co- or (ter)polymer contained in the matt layer consists of propylene/ethylene/(butylene) and has a propylene content of more than 80 % and a melt flow index of 3-6 g/10 min (DIN 53735).

5. A film according to claims 1 - 4, characterised in that the high-density polyethylene (HDPE) contained in the matt layer has a melt flow index of 1-2 g/10 min (DIN 53735).

6. A film according to claims 1 - 5, characterised in that the ethylene-based co- or terpolymer which is modified with polar groups and which is contained in the matt layer has a melt flow index of 3-8 g/10 min (DIN 53735 at 190°C).

7. A process for producing the films according to claims 1 - 6, characterised in that the melts corresponding to the individual layers of the film are coextruded through a sheet die, the coextruded film is subjected to cooling on corresponding rolls for solidification, the film is stretched by a factor of 4-5 in a longitudinal direction at a temperature of 100-130°C and is stretched by a factor of 8-9 in a transverse direction at a temperature of 150-170°C, the biaxially stretched film is thermofixed, pretreated with a corona discharge and is subsequently rolled up.

8. A process according to claim 7, characterised in that an additional layer can be applied between the longitudinal stretching step and the transverse stretching step, by melt coating or by film lamination.

9. Use of the film according to any one of claims 1 - 6 as a packaging film.

10. Use of the film according to any one of claims 1 - 6 for the finishing of printed graphics products, wherein the matt side does not face the printed product.

11. A film according to claim 1, characterised in that a UV-curable clear lacquer is applied to the matt side.

## Revendications

1. Feuilles en polypropylène mates, bi- ou multicouches, étirées biaxialement, en une couche mate externe M, une couche centrale C et facultativement diverses autres couches S, qui sont jointes à la face opposée de la couche mate M, à la couche centrale, où la couche mate M a une épaisseur de couche allant de 0,5 à 5,0 µm et est élaborée à partir d'un mélange polymère des composants :
25-75% d'un ou de plusieurs copolymères séquencés polypropylène-polyéthylène ;
5-15% d'un co- ou terpolymère à base d'éthylène, modifié par des radicaux polaires ;
15-40% d'un co- et/ou terpolymère statistique élaboré à partir de propylène/éthylène/butylène avec le propylène comme composant principal ;
5-20% d'un polyéthylène à haute densité ;
0-5% d'un acide silicique naturel ou synthétique,
où les composants cités sont mis en oeuvre en l'état vierge et/ou sous forme de lots de ceux-ci,
où la couche centrale C consiste en un polymère et/ou copolymère thermoplastique de propylène, qui peut être muni des agents de glissement, antistatique et/ou antiblocking usuels,
où les couches S, qui sont jointes à la face opposée de la couche mate M, à la couche centrale C, consistent en un polypropylène thermoplastique, qui peut être muni des agents de glissement, antistatique et/ou antiblocking usuels,
et/ou en un copolymère statistique thermoplastique de polypropylène avec une ou plusieurs α-oléfines ayant 2 à 6 atomes C, qui peut être muni des agents de glissement, antistatique et/ou antiblocking usuels,
ou en une couche pouvant être stratifiée à chaud, en un mélange de copolymères à base d'éthylène,
ou en une combinaison des couches S citées.

2. Feuilles suivant la revendication 1, caractérisées en ce que le polypropylène de la couche centrale consiste en un polypropylène isotactique avec une fraction soluble dans le n-heptane de 6% en poids ou moins.

3. Feuilles suivant les revendications 1 et 2, caractérisées en ce que le copolymère séquencé polypropylène-polyéthylène contenu dans la couche mate présente une fraction d'éthylène de 6-8% en poids et un indice de fluidité de 3-6 g/10 minutes (DIN 53735).

4. Feuilles suivant les revendications 1 à 3, caractérisées en ce que le co- ou terpolymère contenu dans la couche mate consiste en propylène/éthylène/(butylène) et présente une fraction de propylène supérieure à 80% et un indice de fluidité de 3-6 g/10 minutes (DIN 53735).

5. Feuilles suivant les revendications 1 à 4, caractérisées en ce que le polyéthylène haute densité (HDPE) contenu dans la couche mate présente un indice de fluidité de 1-2 g/10 minutes (DIN 53735).

6. Feuilles suivant les revendications 1 à 5, caractérisées en ce que le co- ou terpolymère à base d'éthylène, modifié par des radicaux polaires, contenu dans la couche mate présente un indice de fluidité de 3-8 g/10 minutes (DIN 53735 à 190°C).

7. Procédé de préparation des feuilles suivant les revendications 1 à 6, caractérisé en ce que les masses fondues correspondant aux couches individuelles des feuilles sont coextrudées par une filière plate, la feuille coextrudée subit un refroidissement sur des cylindres appropriés pour consolidation, la feuille est étirée dans la direction longitudinale, à une température de 100-130°C d'un facteur 4-5 et dans la direction transversale à une température de 150-170°C d'un facteur 8-9, la feuille étirée biaxialement est thermofixée, traitée par corona et ensuite, enroulée.

8. Procédé suivant la revendication 7, caractérisé en ce que l'on applique une couche supplémentaire entre l'étirage longitudinal et l'étirage transversal, par revêtement de masse fondue ou stratification de film.

9. Utilisation des feuilles suivant l'une quelconque des revendications 1 à 6, comme feuille d'emballage.

10. Utilisation des feuilles suivant l'une quelconque des revendications 1 à 6, pour valoriser les produits d'impression graphique, où la face mate n'est pas dirigée vers le produit d'impression.

11. Feuille suivant la revendication 1, caractérisée en ce que on applique sur la face mate, un revêtement limpide durcissant aux UV.
